# EUROPEAN PATENT APPLICATION

(11) **EP 0 689 369 A1**
(43) Date of publication of application: **27.12.1995**
(21) Application number: 95109586.8
(22) Date of filing: 19.06.1995
(51) Int. Cl.: H04Q 7/38, G08G 1/127

(54) **Mobile communications system**

(30) Priority: 20.06.1994 GB 9412345
(71) Applicant: MOTOROLA LTD, Basingstoke, Hampshire RG22 4PD (GB)
(72) Inventor: Crichton, Paul, Newbury, Berks (GB)
(74) Representative: Dunlop, Hugh Christopher

(57) **Abstract**

A method for determining whether a mobile station is travelling on a predetermined route in a communications system including the steps of measuring a normalised signature for the predetermined route, measuring received parameters of at least one mobile station, and comparing the received parameters with the normalised signature.

## Description

### Field of the Invention

This invention relates in general to communications systems and more particularly to a method of determining whether a mobile station is travelling on a predetermined route in a communications system.

### Background to the Invention

In the current digital communications systems, mobile stations can be located to within a location area or cell area. At best this can be to within one cell area, but in typical implementation a location area would contain 20-30 cells.

Satellite global positioning systems can locate mobile stations more precisely, but satellite global positioning systems are expensive and independent of communications systems.

A triangulation method may be used to more accurately locate a mobile station. However, such a method involves having measurements taken from two base stations and knowing the distance between the two base stations. The triangulation method is not desirable because base stations may be far apart from one another or only one base station may be able to transmit or receive to a mobile station. In either case the triangulation would not be able to accurately locate a given mobile station.

Automated tolling systems for motorways are being proposed throughout different countries in the world, particularly Europe. Some include global positioning systems which are very expensive are independent of any cellular system. It would be desirable to have an automated tolling system that could use available communications systems and equipment.

It is most desirable to have a method of locating a mobile within a cell or determine whether a specific route has been taken by a mobile station.

### Summary of the Invention

According to the present invention, there is provided a method for determining whether a mobile station is travelling on a predetermined route in a communications system including the steps of measuring a normalised signature for the predetermined route, measuring received parameters of at least one mobile station, and comparing the received parameters with the normalised signature.

### Brief Description of the Drawing

FIG. 1 illustrates a mobile station travelling upon a particular route.

FIG. 2 is a plot of an unnormalised signature for the mobile station of FIG. 1.

FIG. 3 is a plot of a normalised signature for the mobile station of FIG. 1.

FIG. 4 is a flow chart according to a preferred embodiment of the present invention.

FIG. 5 is an expansion of a part of FIG. 4.

FIGS. 6 and 7 are expansions of parts of FIG. 5.

### Detailed Description of the Preferred Embodiment

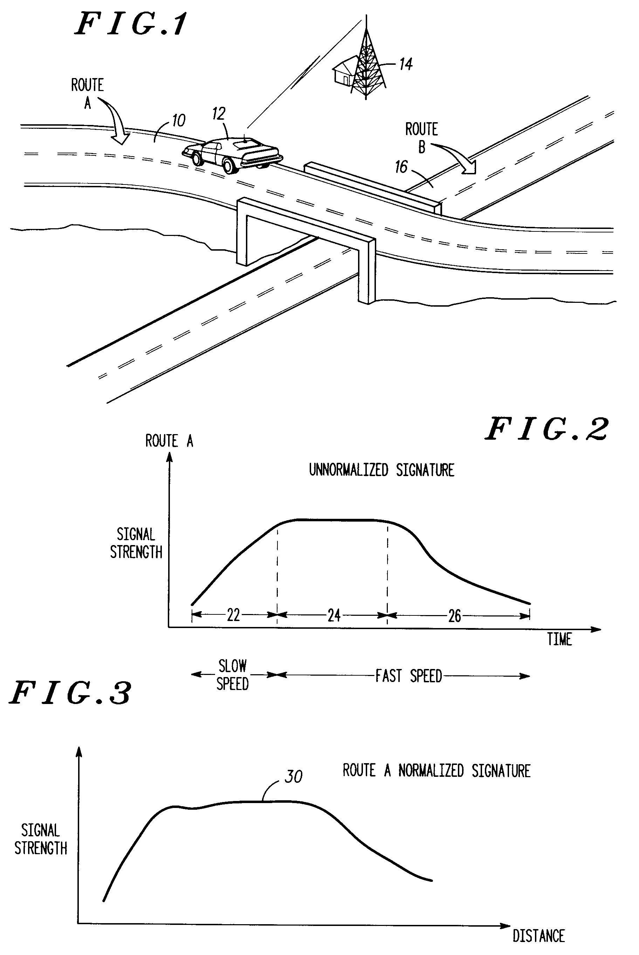

Referring to FIG. 1, a vehicle including a mobile station 12 is shown travelling along a route A 10. Route A may be any motorway or highway. The mobile station 10 is communicating to a base station 14. Route B 16 is also shown in FIG. 1 as a route that is close to or intersects route A.

As the mobile station 12 travels along route A 10 it monitors a signal strength of the base station 14 and will see a variation in the signal strength. For a given route the signal variation will be consistent if measurements are normalised with respect to distance travelled. However, such signals will need to be averaged to eliminate temporal signal changes which are not representative of an underlying trend in signal strength variation representing a particular route. There is a predefined geographic relationship between base stations and certain routes that mobiles may take (roads, rail tracks & waterways) representable by signal strength trends or other varying received parameters.

FIG. 2 represents an unnormalised signature of the mobile station 12 travelling along route A 10. Signal strength is plotted against time. Segment 22 was plotted when the mobile station 12 was moving at a slow speed and shows an increase of the signal strength as the mobile station 12 travels towards the base station 14. Segment 24 was plotted when the mobile station was travelling at a fast speed and shows a consistent signal strength as the mobile station travels around the base station 14. Segment 26 was plotted when the mobile station 12 was moving at a fast speed and shows a decrease in signal strength as the mobile station 12 moves away from the base station 14. Since mobile stations travel at different speeds the plot of signal strength trends of FIG. 2 will vary according to each mobile station travelling along route A at different speeds, therefore it is necessary to relate the signal strength variation to distance travelled. Thus, the unnormalised signature of FIG. 2 needs to allow for speed variations and hence be normalised in order to be a representative trend that can be used in comparisons.

FIG. 3 shows a normalised signature 30 of the mobile station 12 moving along route A 10. A normalised signature is a signature of the route that is not dependent of speed. For any given route a normalised signature can be determined. A normalised signature may be calculated or derived empirically by travelling the route and measuring signal strengths versus distance. This is done by measuring the speed of the mobile when taking time stamped signal strength measurements. However, it is also possible to obtain the normalised signature directly by taking measurements every N km where N is a programmable value. This requires that the speed of the vehicle is known and is used with elapsed time to calculate the distance travelled.

The direction of travel or changes in direction do not need to be explicitly recorded. However, they may be calculated using this method. Using speed and time stamped signal strength measurements, it is possible to calculate the signal strength variations versus distance. Thus, a normalised signature 30 is measured and defines a predetermined route.

In a preferred embodiment, the mobile station 12 has knowledge of the normalised signature 30 of predetermined route A 10. The normalised signature 30 is compared with measurements taken when a mobile station is travelling a route to determine whether the predetermined route A 10 is being travelled.

Mathematically a correlation of two sets of signals may be measured. A number of correlation calculation measurements is made in order to determine whether any section of the measured signature matches the normalised signature 30 of the predetermined route A. There are a number of correlation techniques known in the art that may be used to compare two sets of plotted signals.

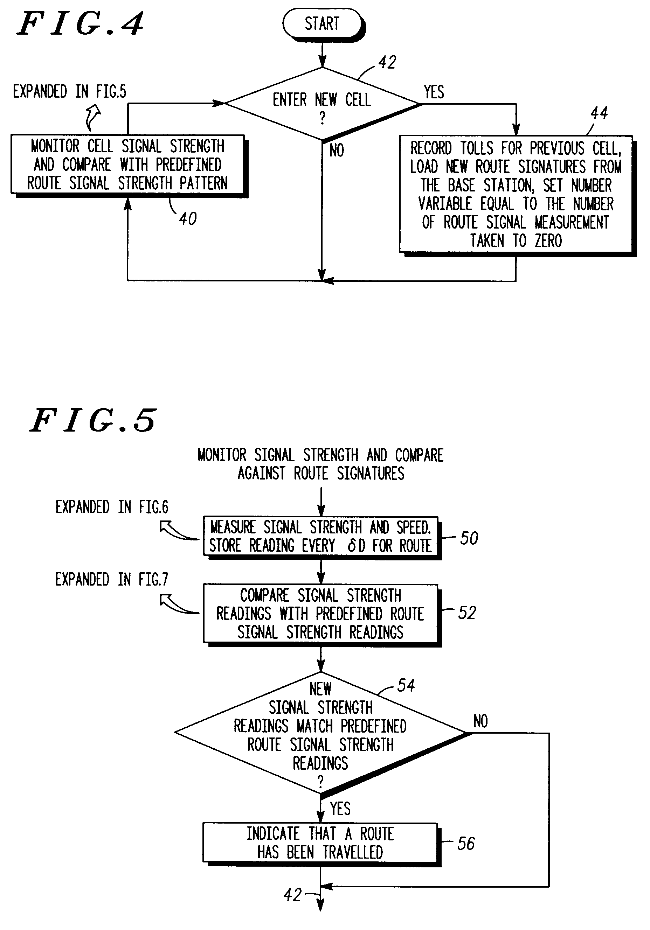

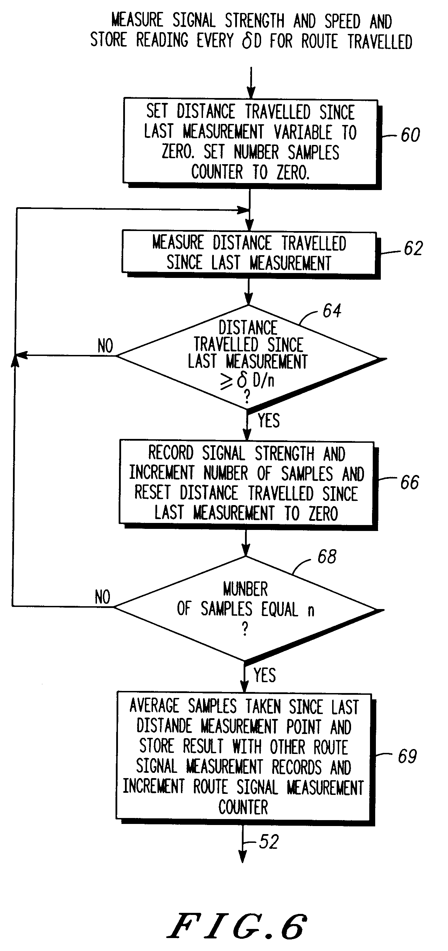

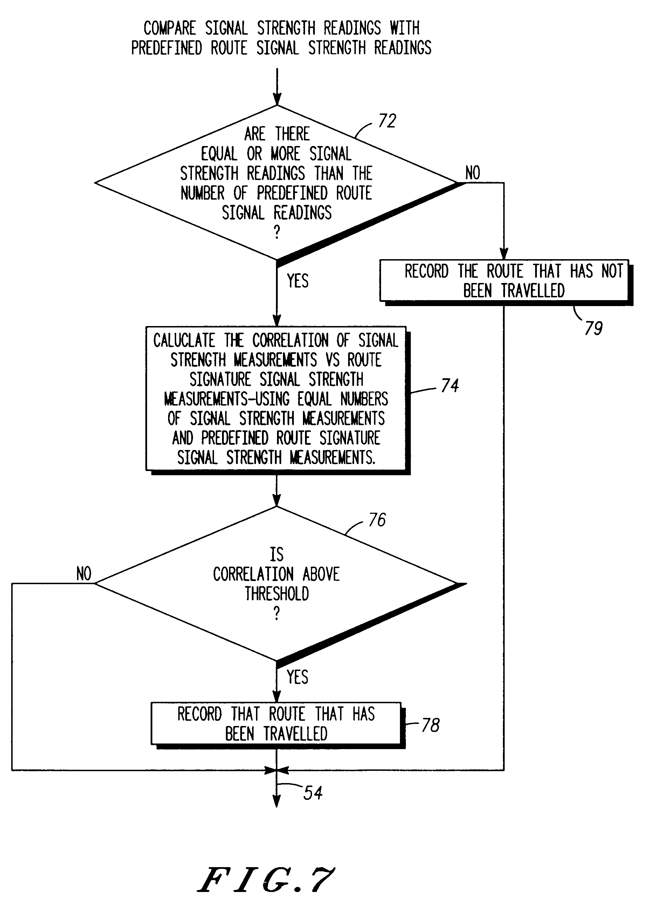

FIG. 4 is a flow chart of a method of the present invention. When a mobile station enters a new cell as determined in step 42, tolls for the previous cell are recorded, new route signatures (normalised) from the new base station are loaded into the mobile station, and a variable equal to the number of route signal measurements is set to 0, as in step 44. Then the mobile station monitors the received signal strength signals from the base station and compares them with a predetermined route as in step 40. Note, in this implementation the measurements are taken at predetermined distance intervals and are already normalised. Similarly, if the mobile station does not then move into a new cell as determined in step 42 it monitors the received signal strength signals from the base station and compares them with a predetermined route as in step 40.

Monitoring the signal strength and comparing it to a predetermined route's normal signature as in step 40, is expanded and further explained in FIG. 5. In step 50, the mobile station measures a received signal strength signal and the speed of the mobile station and stores the readings for a particular distance measurement interval. Then the mobile station compares the signal strength readings with the predefined route signal strength readings of the normalised signature as in step 52. If the new signal strength readings match the predefined route signal strength readings as determined in step 54 then the mobile station indicates to the base station that the representative predefined route has been travelled as in step 56. Alternatively, the mobile station may store the relevant information locally. If not, the mobile station determines whether it has entered a new cell as in step 42.

Fig. 6 expands and further explains step 50 where the mobile station measures the received signal strength signals and the speed of the mobile station and stores the readings every distance interval. Particularly, the mobile station sets a distance travelled variable, representing a distance travelled since the last measurement, to zero and a number samples counter to zero as in step 60. In step 62 the mobile station measures the distance travelled by the mobile station and adds it to the distance travelled variable. The mobile station determines in step 64 whether the distance travelled variable is greater than or equal to a predetermined distance interval divided by the number of samples. If not, then the mobile station continues to measure the distance travelled and adds it to distance travelled variable as in step 62. If yes, then the signal strength received is recorded and the number samples counter is incremented and the distance travelled variable is reset to zero as in step 66.

If the number of samples in the samples counter is equal to n as determined in step 68 then the signal strength readings since the last distance measurement point are averaged and the result is stored with the other route signal strength measurements as in step 69. Also in step 69, the route signal measurement counter is incremented.

If the number of samples in the samples counter is not equal to n as determined in step 68 then the mobile station continues to measure the distance travelled and adds it to distance travelled variable as in step 62.

FIG. 7 expands and further explains step 52 of FIG. 5 where the mobile station compares the signal strength readings with predefined route signal strength readings.

In step 72, it is determined whether there are equal or more route signal strength readings than the number of predefined route signature readings. If yes, then in step 74 the mobile station calculates a correlation of the signal strength measurements versus the route signature (normalised) signal strength measurements. If there are more route signal strength readings than the number of predefined route signature readings then the earliest recorded route signal strength readings are ignored so that the number of readings for both are equal.

If it is determined in step 72 that the number of route signal strength readings are less than the number of predetermined signal strength readings then, it is recorded that the predetermined route has not been travelled as in step 79.

If the correlation calculated in step 74 is above threshold as determined in step 76 then the mobile station records that the predetermined route has been travelled as in step 78.

The normalised signatures could be stored permanently in the mobile or be broadcasted by a base station.

The same method can be used by the mobile on other base stations to verify the findings on the first mobile station.

Furthermore the method may also be performed at a base station instead of by the mobile station.

The method of the present invention may be used to determine whether a mobile has travelled a section of a motorway and be used to trigger a charge to a toll. If the mobile station's trip signature matches a tollable signature then a toll can be remotely charged to the mobile station. Mobile stations travelling in the same cell on non-motorway routes will not be charged as their trip signatures will not match predetermined normalised signatures.

The method of the present invention could also be used to locate a mobile along a section of motorway. The method could be used by traffic guidance systems to either give specific advice on local traffic problem, to give advice on routes to be taken, or to indicate to emergency services that an accident has occurred on a particular section of the motorway.

Similarly, the method could be used to indicate the location of a train moving along a track.

Thus, the present invention provides a method for determining whether a mobile station has travelled a predetermined route as well as a method for locating a mobile station along a predetermined route.

## Claims

1. A method for determining whether a mobile station is travelling on a predetermined route in a communications system, the method comprising the steps of:
measuring a normalised signature for the predetermined route;
storing the normalised signature;
measuring received parameters of the at least one mobile station; and
comparing the received parameters with the stored normalised signature.

2. The method of claim 1 wherein the steps are performed at a base station.

3. The method of claim 1 wherein the steps of storing the normalised signature and measuring received parameters are performed at the mobile station.

4. The method of any of the preceding claims wherein the step of measuring a normalised signature includes the steps of:
measuring received parameters of a test mobile station travelling on the predetermined route; and
calculating the normalised signature for the predetermined route from the received parameters of the test mobile station.

5. The method of any of the preceding claims wherein the step of comparing the received parameters with the stored normalised signature includes
normalising the received parameters; and
comparing the normalised received parameters with the stored normalised signature.

6. The method of any of the preceding claims further comprising the step of determining an absolute position of the mobile station.

7. The method of determining whether a mobile station is travelling on a predetermined route substantially as herein described with reference to FIGS. 4-7 of the drawing.
